# EUROPEAN PATENT SPECIFICATION

(11) **EP 4 025 643 B1**
(45) Date of publication and mention of the grant of the patent: **16.08.2023**
(21) Application number: 20774888.0
(22) Date of filing: 03.09.2020
(51) Int. Cl.: C08K 5/3417, C08K 7/02, C08K 5/00

(54) **THERMOPLASTIC MOLDING COMPOSITIONS THAT RESIST HEAT**
HITZEBESTÄNDIGE THERMOPLASTISCHE FORMMASSEN
COMPOSITIONS DE MOULAGE THERMOPLASTIQUES RÉSISTANTES À LA CHALEUR

(30) Priority: 05.09.2019 EP 19195672
(43) Date of publication of application: 13.07.2022
(73) Proprietor: BASF SE, 67056 Ludwigshafen am Rhein (DE)
(72) Inventor: WELLER, Tina Elisabeth, 67056 Ludwigshafen (DE); HAEDLER, Andreas Thomas, 67056 Ludwigshafen (DE); EIBECK, Peter, 67056 Ludwigshafen (DE); CREMER, Jens, 67056 Ludwigshafen (DE); SURE, Rebecca, 67056 Ludwigshafen (DE); DEGLMANN, Peter, 67056 Ludwigshafen (DE); GUBBELS, Erik, 67056 Ludwigshafen (DE); SCHOEMER, Martina, 67056 Ludwigshafen (DE)
(74) Representative: BASF IP Association
(86) International application number: PCT/EP2020/074525
(87) International publication number: WO 2021/043859

(56) References cited:
- EP-A1- 2 530 076
- DE-A1-102010 048 498
- US-A- 3 505 226
- DATABASE CA [Online] CHEMICAL ABSTRACTS SERVICE, COLUMBUS, OHIO, US; 16 November 2016 (2016-11-16), ZHENG, HAO: "High temperature-resistant supertough PET of injection molding grade", XP002797844, retrieved from STN Database accession no. 2016:1845823 -& CN 106 117 995 A (GUANGDONG YIHAO NEW MAT TECH CO LTD) 16 November 2016 (2016-11-16)

## Description

The invention relates to thermoplastic molding compositions having improved heat-aging resistance.

The invention further relates to the use of the molding compositions of the invention for producing fibers, foils, and moldings of any type, and also to the resultant moldings.

Thermoplastic polymers are often used in the form of glass fiber-reinforced molding compositions as materials in the design of components which during their lifetime have exposure to elevated temperatures. Such polymers, like polycarbonates, polyesters, polyamides, styrene polymers, polyurethanes and polyolefins, have structural elements that are particularly prone to oxidative degradation reactions, which can be accelerated by heat, light or catalysts.

Although the thermooxidative degradation can be delayed by adding known heat stabilizers, it cannot be prevented in the long term, and becomes apparent by way of example in a reduced level of mechanical properties.

An overview of the different classes of heat stabilizers comprising H-donors, hydroperoxide de-composers, alkyl radical scavengers and metal deactivators can be found in the Plastics Additives Handbook, chapter 1, edited by Hans Zweifel (6th edition, Carl Hanser Verlag, Munich).

Polymer compounds based on polyamide, polyester or polyketone can be stabilized against heat by a combination of organic triaryl phosphite and sterically hindered phenolic antioxidant as disclosed in DE 197 12 788 A1.

Different HAR additives are used in polyamide molding composition, for example elemental iron powder, a combination of Cu-containing stabilizers with iron oxides, organic HALS (hindered amine light stabilizers) compounds or sterically hindered phenols or polyhydroxy alcohols. More recent HAR additives for polyamides are highly branched melamine polymers for melamine-urea polymers, as disclosed in WO 2011/110508 A1, highly functional polyetherols having a hydroxyl number of from 3 to 1350 mg KOH/g_{polyetherol}, as disclosed in WO 2011/157615, or polyacrylamides for polyvinylamides, as disclosed in WO 2012/0062594 A1.

Heat stabilization of polyester with stabilizers based on phosphite esters are known from DE 26 15 341 A1, DE 27 08 790 A1 and EP 0 048 878 A1

The heat-aging resistance of the known molding compositions remains unsatisfactory, in particular over prolonged periods of exposure to heat.

It is highly desirable to improve the heat-aging resistance (HAR) of these polymers, since this can achieve longer lifetimes for components subject to thermal stress, or can reduce the risk that these fail. As an alternative, improved HAR can also permit the use of the components at higher temperatures.

It was therefore an object of the present invention to provide thermoplastic molding compositions, preferably polyamide or polybutylene terephthalate molding compositions, which have improved HAR, and which, after heat-aging, have good mechanical properties.

The object is achieved according to the present invention by a thermoplastic molding composition, comprising
A) from 10 to 99.99% by weight of a thermoplastic polymer selected from aliphatic or semiaromatic polyamides and polybutylene terephthalate,
B) from 0.01 to 20% by weight of at least one carbazole compound selected from substituted and unsubstituted carbazole and organic compounds containing at least one chemically bonded substituted or unsubstituted carbazole residue,
C) from 0 to 70% by weight of further additives,
where the total of the percentages by weight of components A) to C) is 100% by weight.

Preferably, in the at least one carbazole compound the carbazole nitrogen is unsubstituted or substituted by a hydrocarbon residue having at least one alpha hydrogen atom.

More preferably, the carbazole compound is selected from the group consisting
- of compounds having a substituted carbazole residue and having a molecular weight of at least 200 g/mol, wherein the nitrogen atom of the carbazole residue is substituted by hydrogen or C₁₋₂₀-alkyl,
- of compounds having a carbazole residue substituted by one or more primary amino groups, carboxyl groups, carbodiimide groups, anhydride groups, isocyanate groups, and/or epoxy groups, or by residues, bearing at least one of these groups, or
- of compounds having at least two substituted or unsubstituted carbazole residues in their molecular structure.

The object is furthermore achieved by the use of at least one carbazole compound selected from, substituted and unsubstituted carbazole and organic compounds containing at least one chemically bonded substituted or unsubstituted carbazole residue as heat stabilizer in thermoplastic molding compositions comprising aliphatic or semiaromatic polyamides, or polybutylene terephthalate as thermoplastic polymer.

The object is furthermore achieved by the use of the above thermoplastic molding composition for producing fibers, foils, and moldings of any type, and by the fibers, foils or moldings made of the above thermoplastic molding composition.

According to the present invention, it has been found that carbazole and carbazole compounds act as heat stabilizers in thermoplastic molding compositions. Substituted and unsubstituted carbazole and organic compounds containing at least one chemically bonded substituted or unsubstituted carbazole residue form a new class of heat stabilizers for thermoplastic molding compositions. The heat stabilizing effect can be achieved in aliphatic or semiaromatic polyamides and polyesters.

The heat stabilizing effect is pronounced in aliphatic or semiaromatic polyamides and polybutylene terephthalate which are therefore employed as component A). The effect is most pronounced when the carbazole compound has a high enough molecular weight so that it does not exit the thermoplastic molding composition under preparation and at molding temperatures. Alternatively, for a most pronounced effect, the carbazole compound is able to react with the end groups or functional groups of the polymer, so that it is covalently linked to the polymer chain, also preventing its exit from the thermoplastic molding composition under higher temperatures as they occur during preparing the molding composition and preparing the fibers, foils or moldings.

Unless stated otherwise, the following amounts are based on the total of components A) to C) which is 100% by weight.

Preferably, the thermoplastic molding compositions is free from triplet emitters, and thus preferably does not contain the triplet emitters disclosed in DE 10 2010 048 498, specifically in paragraph 115. Preferably, the molding composition is not a material for OLED mixtures.

The molding compositions of the invention comprise, as component A), from 10 to 99.99% by weight, preferably from 45 to 95.9% by weight, and in particular from 69 to 95.8% by weight, of at least one aliphatic or semiaromatic polyamide or polyalkylene terephthalate or mixture thereof.

The polyamides of the molding compositions of the invention generally have an viscosity number (VN) (or reduced viscosity) of from 90 to 350 ml/g, preferably from 90 to 240 ml/g, more preferably from 110 to 240 ml/g, determined in a 0.5% strength by weight solution in 96% strength by weight sulfuric acid at 25°C to ISO 307.

Preference is given to semicrystalline or amorphous resins with a molecular weight (weight average) of at least 5000, described by way of example in the following US patents: 2 071 250, 2 071 251, 2 130 523, 2 130 948, 2 241 322, 2 312 966, 2 512 606, and 3 393 210.

Examples of these are polyamides that derive from lactams having from 7 to 13 ring members, e.g. polycaprolactam, polycaprylolactam, and polylaurolactam, and also polyamides obtained via reaction of dicarboxylic acids with diamines.

Dicarboxylic acids which may be used are alkanedicarboxylic acids having from 4 to 40, preferably from 6 to 12, in particular from 6 to 10, carbon atoms, and aromatic dicarboxylic acids. Merely as examples, those that may be mentioned here are adipic acid, azelaic acid, sebacic acid, dodecanedioic acid and terephthalic and/or isophthalic acid.

Particularly suitable diamines are alkanediamines having from 4 to 12, in particular from 6 to 8, carbon atoms, and also m-xylylenediamine (e.g. Ultramid^{®} X17 from BASF SE, where the molar ratio of MXDA to adipic acid is 1:1), di(4-aminophenyl)methane, di(4-aminocyclohexyl)methane, 2,2-di(4-aminophenyl)propane, 2,2-di(4-aminocyclohexyl)propane, and 1,5-diamino-2-methylpentane.

Preferred polyamides are polyhexamethyleneadipamide, polyhexamethylenesebacamide, and polycaprolactam, and also nylon-6/6,6 copolyamides, in particular having a proportion of from 5 to 95% by weight of caprolactam units (e.g. Ultramid^{®} C31 from BASF SE).

Other suitable polyamides are obtainable from ω-aminoalkylnitriles, e.g. aminocapronitrile (PA 6) and adipodinitrile with hexamethylenediamine (PA 66) via what is known as direct polymerization in the presence of water, for example as described in DE-A 10313681, EP-A 1198491 and EP 922065.

Mention may also be made of polyamides obtainable, by way of example, via condensation of 1,4-diaminobutane with adipic acid at an elevated temperature (nylon-4,6). Preparation processes for polyamides of this structure are described by way of example in EP-A 38 094, EP-A 38 582, and EP-A 39 524.

Other suitable examples are polyamides obtainable via copolymerization of two or more of the abovementioned monomers, and mixtures of two or more polyamides in any desired mixing ratio. Particular preference is given to mixtures of nylon-6,6 with other polyamides, in particular nylon-6/6,6 copolyamides.

Other copolyamides which have proven particularly advantageous are semiaromatic copolyamides, such as PA 6T/6 and PA 6T/66, where the triamine content of these is less than 0.5% by weight, preferably less than 0.3% by weight (see EP-A 299 444). Other polyamides resistant to high temperatures are known from EP-A 19 94 075 (PA 6T/6I/MXD6).

The following list, which is not comprehensive, comprises the polyamides A) mentioned and other polyamides A) for the purposes of the invention, and the monomers comprised:
AB polymers:

| | |
|---|---|
| PA 4 | Pyrrolidone |
| PA 6 | ε-Caprolactam |
| PA 7 | Ethanolactam |
| PA 8 | Caprylolactam |
| PA 9 | 9-Aminopelargonic acid |
| PA 11 | 11-Aminoundecanoic acid |
| PA 12 | Laurolactam |

AA/BB polymers:

| | |
|---|---|
| PA 46 | Tetramethylenediamine, adipic acid |
| PA 56 | Pentamethylenediamine, adipic acid |
| PA 510 | Pentamethylenediamine, sebacic acid |
| PA 512 | Pentamethylenediamine, decanedicarboxylic acid |
| PA 66 | Hexamethylenediamine, adipic acid |
| PA 69 | Hexamethylenediamine, azelaic acid |
| PA 610 | Hexamethylenediamine, sebacic acid |
| PA 612 | Hexamethylenediamine, decanedicarboxylic acid |
| PA 613 | Hexamethylenediamine, undecanedicarboxylic acid |
| PA 1212 | 1,12-Dodecanediamine, decanedicarboxylic acid |
| PA 1313 | 1,13-Diaminotridecane, undecanedicarboxylic acid |
| PA 6T | Hexamethylenediamine, terephthalic acid |
| PA MXD6 | m-Xylylenediamine, adipic acid |
| PA 9T | Nonamethylenediamine, terephthalic acid |

AA/BB polymers:

| | |
|---|---|
| PA 6I | Hexamethylenediamine, isophthalic acid |
| PA 6-3-T | Trimethylhexamethylenediamine, terephthalic acid |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T, PA 6T/6I | (see PA 6I and PA 6T) |
| PA PACM 12 | Diaminodicyclohexylmethane, laurolactam |
| PA 6I/6T/PACM | as PA 6I/6T + diaminodicyclohexylmethane |
| PA 6/6.36 | Caprolactam/hexamethylenediamine, C₃₆-dicarboxylic acid |
| PA 6T/66 | (see PA 6T and PA 66) |
| PA 12/MACMI | Laurolactam, dimethyldiaminodicyclohexylmethane, isophthalic acid |
| PA 12/MACMT | Laurolactam, dimethyldiaminodicyclohexylmethane, terephthalic acid |
| PA PDA-T | Phenylenediamine, terephthalic acid |

Most preferred are PA 6, PA 66, PA 6/66, PA 66/6, PA 6/6.36, PA 6I/6T, PA 6T/6I, PA 9T and PA 6T/66.

Polybutylene terephthalate has preferably a viscosity number in the range of from 50 to 220, preferably from 70 to 160 (measured in 0.5% by weight solution in a phenol-o-dichlorobenzene mixture (ratio by weight 1:1 at 25°C) in accordance with ISO 1628.

For injection molding, viscosity numbers in the range of from 70 to 130 cm³/g, more preferably in the range of from 75 to 115 cm³/g are preferred.

For a further disclosure of suitable polybutylene terephthalates, reference can be made to WO 2019/068597 and the literature cited therein.

According to one embodiment of the invention, componend A) is a blend of aliphatic or semiaromatic polyamide and polybutylene terephthalate. The weight ratio of polyamide and polyalkylene terephthalate is preferably 95 : 5 to 5 : 95, more preferably 90 : 10 to 10 : 90, most preferably 20 : 80 to 80 : 20.

The molding compositions of the invention comprise, as component B), from 0.01 to 20% by weight, preferably from 0.1 to 5% by weight, and in particular from 0.2 to 1% by weight, of substituted or unsubstituted carbazole or an organic compound containing at least one chemically bonded substituted or unsubstituted carbazole residue, preferably of at least one carbazole compound in which the carbazole nitrogen is unsubstituted or bears a hydrocarbon residue having at least one alpha hydrogen atom as substituent, more preferably of at least one carbazole compound selected from the group consisting
- of compounds having a substituted carbazole residue and having a molecular weight of at least 200 g/mol, wherein the nitrogen atom of the carbazole residue bears hydrogen or a C₁₋₂₀-alkyl substituent,
- of compounds having a, preferably one, carbazole residue substituted by one or more primary amino groups, carboxyl groups, carbodiimide groups, anhydride groups, isocyanate groups, and/or epoxy groups, or by residues, bearing at least one of these groups compounds having one carbazole residue substituted by one or two primary amino group or epoxy group bearing residues bearing preferred , or
- of compounds having at least two substituted or preferably unsubstituted carbazole residues in their molecular structure, preferably two or three unsubstituted carbazole residues in their molecular structure. 3,3'-bicarbazole is most preferred.

Typical substituents can be C₁₋₁₂-alkyl, C₆₋₁₂-aryl, C₇₋₁₃-alkaryl and C₇₋₁₃-aralkyl residues. Furthermore, halogen, amino, carboxy and hydroxyl groups can be mentioned as suitable substituents.

In organic compounds containing at least one chemically bonded carbazole residue, the carbazole residue can be bonded via the nitrogen atom or one of the carbon atoms.

Substituted carbazoles preferably have substituents in the p-position relative to the nitrogen atom.

Preferably, the nitrogen atom of the carbazole group is not substituted by phenylene or tert-butyl residues since those residues do not have an alpha hydrogen atom.

The carbazole compound, in order to have the highest heat stabilizing effect, should preferably have one or more of the following features:
- a molecular weight of at least 200 g/mol, preferably at least 220 g/mol, more preferably at least 229 g/mol,
- a or at least one substituent which enables a covalent linking of the carbazole compound with the polymer of the thermoplastic molding composition, i.e. reactive substituent(s),
- two or more, preferably unsubstituted, carbazole units are combined in the molecular structure.

The preferred carbazole compounds employed according to the present invention can be unsubstituted or substituted. Preferred substituents are selected from C₁₋₁₂-alkyl, C₁₋₁₂-alkoxy, halogen, C₁₋₁₂-amino, C₁₋₁₂-carboxy, amino, epoxy, for example glycidyl, carboxyl, carbodiimides, anhydrides, isocyanates, preferably (primary) amino or glycidyl. Preferably, the component B) is 3,3'-bicarbazole or a polymer having at least three substituted or unsubstituted carbazole residues in its molecular structure, or is a carbazole compound in which the nitrogen atom of the carbazole residue is substituted by hydrogen, or is a carbazole compound having at least primary amino group, carboxyl group and/or epoxy group covalently linked with the carbazole residue in the 3-, 4- or N-position.

Preferably, the component B) is free from or does not contain boron ester groups and is not a boron ester as e.g. disclosed in US 3,505,226. Therefore, component B) preferably does not contain boron ester linkages.

More preferably, the carbazole compound is selected from a group consisting of 3,3'-bicarbazole, 11H-benzo[a]carbazole, 7H-benzo[c]carbazole, 5H-benzo[4,5]thieno[3,2-c]carbazole, 10-bromo-7H-benzo[c]carbazole, 1-bromocarbazole, 2-bromocarbazole, 3-bromocarbazole; 4-bromocarbazole, 2-bromo-7-methoxy-9H-carbazole, 3-(tert-butyl)-9H-carbazole, 3,6-di-tert-butylcarbazole, carprofen, 2-chloro-9H-carbazole, 3,6-diaminocarbazole, 7H-dibenzo[c,g]carbazole, 2,7-dibromocarbazole, 3,6-dibromocarbazole, 3,6-dichlorocarbazole, 3,6-diethynylcarbazole, 10,15-dihydro-5H-diindolo[3,2-a:3',2'-c]carbazole, 5,7-dihydroindolo[2,3-b]carbazole, 5,11-dihydroindolo[3,2-b]carbazole, 11,12-dihydroindolo[2,3-a]carbazole, 11,12-dihydro-11-phenylindolo[2,3-a]carbazole, 3,6-diiodocarbazole, 2,7-dimethoxy-9H-carbazole, 3,6-dimethoxy-9H-carbazole, 3,6-dimethylcarbazole, 3,6-diphenylcarbazole, 2,7-diphenyl-9H-carbazole, 3-fluorocarbazole, 2-fluoro-9H-carbazole, 4-glycidyloxycarbazole, 3-lodocarbazole, 2-methoxycarbazole, methyl-9H-carbazole, 2-phenyl-9H-carbazole, 3-phenyl-9H-carbazole, 4-phenyl-9H-carbazole, 5-phenyl-5,12-dihydroindolo[3,2-a]carbazole, 1,3,6,8-tetrabromocarbazole, 1,3,6,8-tetra-tert-butylcarbazole, and N,N,N',N'-tetrakis(4-methoxyphenyl)-9H-carbazole-3,6-diamine, and poly(N-vinylcarbazole).

Most preferably, component B) is selected from the group consisting of 3,3'-bicarbazole, 11,12-dihydroindolo[2,3-a]carbazole, 3,6-di-tert-butylcarbazole, 3,6-diaminocarbazole, 3,6-dibromocarbazole, 3,6-dimethoxy-9H-carbazole, 4-glycidyloxycarbazole and poly(N-vinylcarbazole).

The number-average molar mass Mₙ of the carbazole polymers B) of the invention is preferably at least 5000 g/mol, particularly preferably at least 10000 g/mol, and in particular at least 20000 g/mol.

The molecular weight and molar mass data (Mₙ, M_{w}) and polydispersity data provided for the purposes of the present invention are based on values obtained using gel permeation chromatography (GPC) in hexafluoroisopropanol as solvent, with PMMA calibration.

Unless otherwise stated, the following general choices and definitions apply for the possible substituents of carbazoles:
C₁-C₄-Alkyl is a linear or branched alkyl radical having from 1 to 4 carbon atoms. These are methyl, ethyl, n-propyl, isopropyl, n-butyl, sec-butyl, isobutyl, and tert-butyl.

Linear C₁-C₄-alkyl is a linear alkyl radical having from 1 to 4 carbon atoms. These are methyl, ethyl, n-propyl, and n-butyl.

C₁-C₁₂-Alkyl is a linear or branched alkyl radical having from 1 to 12 carbon atoms. Examples of these are methyl, ethyl, n-propyl, isopropyl, n-butyl, sec-butyl, isobutyl, tert-butyl, pentyl, neopentyl, hexyl, heptyl, octyl, 2-ethylhexyl, nonyl, decyl, 2-propylheptyl, 4-methyl-2-propylhexyl, undecyl, dodecyl, and structural isomers of these.

Aryl is a carbocyclic aromatic radical having from 6 to 14 carbon atoms, e.g. phenyl, naphthyl, anthracenyl, or phenanthrenyl. Aryl is preferably phenyl or naphthyl, and in particular phenyl.

Aryl-C₁-C₄-alkyl is C₁-C₄-alkyl as defined above, but where a hydrogen atom has been replaced by an aryl group. Examples are benzyl, phenethyl, and the like.

C₁-C₄-Alkylene is a linear or branched divalent alkyl radical having 1, 2, 3, or 4 carbon atoms. Examples are -CH₂-, -CH₂CH₂-, -CH(CH₃)-, -CH₂CH₂CH₂-, -CH(CH₃)CH₂-, -CH₂CH(CH₃)-, -C(CH₃)₂-, -CH₂CH₂CH₂CH₂-, -CH(CH₃)CH₂CH₂-, -CH₂CH₂CH(CH₃)-, -C(CH₃)₂CH₂-, -CH₂C(CH₃)₂-, and -CH₂CH₂CH₂CH₂CH₂-.

Linear or branched C₂-C₅-alkylene is a linear or branched divalent alkyl radical having 2, 3, 4, or 5 carbon atoms. Examples are -CH₂CH₂-, -CH(CH₃)-, -CH₂CH₂CH₂-, -CH(CH₃)CH₂-, -CH₂CH(CH₃)-, -C(CH₃)₂-, -CH₂CH₂CH₂CH₂-, -CH(CH₃)CH₂CH₂-, -CH₂CH₂CH(CH₃)-, -C(CH₃)₂CH₂-, -CH₂C(CH₃)₂-, and -CH₂CH₂CH₂CH₂CH₂-.

Linear or branched C₄-C₈-alkylene is a linear or branched divalent alkyl radical having from 4 to 8 carbon atoms. Examples are -CH₂CH₂CH₂CH₂-, -CH(CH₃)CH₂CH₂-, -CH₂CH₂CH(CH₃)-, -C(CH₃)₂CH₂-, -CH₂C(CH₃)₂-, -CH₂CH₂CH₂CH₂CH₂-, -CH₂C(CH₃)₂CH₂-, -CH₂CH₂CH₂CH₂CH₂CH₂-, -(CH₂)₇-, -(CH₂)₈-, and positional isomers thereof.

Linear or branched C₂-C₁₀-alkylene is a linear or branched divalent alkyl radical having from 2 to 10 carbon atoms. Examples, alongside the abovementioned C₂-C₅-alkylene radicals, are the higher homologs having from 6 to 10 carbon atoms, e.g. hexylene, heptylene, octylene, nonylene, and decylene.

Linear or branched C₂-C₂₀-alkylene is a linear or branched divalent alkyl radical having from 2 to 20 carbon atoms. Examples, alongside the abovementioned C₂-C₅-alkylene radicals, are the higher homologs having from 6 to 20 carbon atoms, e.g. hexylene, heptylene, octylene, nonylene, decylene, undecylene, dodecylene, tridecylene, tetradecylene, pentadecylene, hexadecylene, heptadecylene, octadecylene, nonadecylene, and eicosylene.

Alkenylene is a linear or branched aliphatic mono- or polyolefinically unsaturated, e.g. mono- or diolefinically unsaturated, divalent radical having by way of example from 2 to 20, or from 2 to 10, or from 4 to 8, carbon atoms. If the radical comprises more than one carbon-carbon double bond, these are preferably not vicinal, i.e. not allenic.

Alkynylene is a linear or branched aliphatic divalent radical having by way of example from 2 to 20, or from 2 to 10, or from 4 to 8, carbon atoms, and comprising one or more, e.g. 1 or 2, carbon-carbon triple bonds.

C₅-C₈-Cycloalkylene is a divalent monocyclic, saturated hydrocarbon group having from 5 to 8 carbon ring members. Examples are cyclopentane-1,2-diyl, cyclopentane-1,3-diyl, cyclohexane-1,2-diyl, cyclohexane-1,3-diyl, cyclohexane-1,4-diyl, cycloheptane-1,2-diyl, cycloheptane-1,3-diyl, cycloheptane-1,4-diyl, cyclooctane-1,2-diyl, cyclooctane-1,3-diyl, cyclooctane-1,4-diyl, and cyclooctane-1,5-diyl.

A 5- or 6-membered unsaturated nonaromatic heterocycle which has bonding by way of N and which can also comprise one or two further nitrogen atoms, or one further sulfur atom or oxygen atom, as ring member, is by way of example pyrrolin-1-yl, pyrazolin-1-yl, imidazolin-1-yl, 2,3-dihydrooxazol-3-yl, 2,3-, and 2,5-dihydroisoxazol-2-yl, 2,3-dihydrothiazol-3-yl, 2,3-, and 2,5-dihydroisothiazol-2-yl, [1,2,3]-1H-triazolin-1-yl, [1,2,4]-1H-triazolin-1-yl, [1,3,4]-1H-triazolin-1-yl, [1,2,3]-2H-triazolin-2-yl, 1,2-dihydropyridin-1-yl, 1,4-dihydropyridin-1-yl, 1,2,3,4-tetrahydropyridin-1-yl, 1,2-dihydropyridazin-1-yl, 1,4-dihydropyridazin-1-yl, 1,6-dihydropyridazin-1-yl, 1,2,3,4-tetrahydropyridazin-1-yl, 1,4,5,6-tetrahydropyridazin-1-yl, 1,2-dihydropyrimidin-1-yl, 1,4-dihydropyrimidin-1-yl, 1,6-dihydropyrimidin-1-yl, 1,2,3,4-tetrahydropyrimidin-1-yl, 1,4,5,6-tetrahydropyrimidin-1-yl, 1,2-dihydropyrazin-1-yl, 1,4-dihydropyrazin-1-yl, 1,2,3,4-tetrahydropyrazin-1-yl, 1,4-oxazin-4-yl, 2,3-dihydro-1,4-oxazin-4-yl, 2,3,5,6-tetrahydro-1,4-oxazin-4-yl, 1,4-thiazin-4-yl, 2,3-dihydro-1,4-thiazin-4-yl, 2,3,5,6-tetrahydro-1,4-thiazin-4-yl, 1,2-dihydro-1,3,5-triazin-1-yl, and 1,2,3,4-tetrahydro-1,3,5-triazin-1-yl, A 5- or 6-membered unsaturated aromatic heterocycle which has bonding by way of N and which can also comprise a further nitrogen atom, as ring member, is by way of example pyrrol-1-yl, pyrazol-1-yl, imidazol-1-yl, and triazol-1-yl. A primary amino group is an -NH₂ radical.

The molding compositions of the invention can comprise, as component C), up to 70% by weight, preferably up to 50% by weight, more preferably up to 30% by weight, of further additives.

The thermoplastic molding compositions of the invention can comprise, as component C), conventional processing aids, such as stabilizers, oxidation retarders, agents to counteract decomposition by heat and decomposition by ultraviolet light, lubricants and mold-release agents, colorants, such as dyes and pigments, nucleating agents, and plasticizers. Fibrous or particulate fillers C1) that may be mentioned are carbon fibers, glass fibers, glass beads, amorphous silica, calcium silicate, calcium metasilicate, magnesium carbonate, kaolin, chalk, powdered quartz, mica, barium sulfate, and feldspar, and the amounts of these that can be used are from 1 to 50% by weight, in particular from 5 to 45% by weight, preferably from 10 to 40% by weight, based on the total of compnents A) to C), which is 100 wt%.

Preferred fibrous fillers that may be mentioned are carbon fibers, aramid fibers, and potassium titanate fibers, particular preference being given to glass fibers, most preferably in the form of E glass. These can be used as rovings or in the commercially available forms of chopped glass. The fibrous fillers may have been surface-pretreated with a silane compound to improve compatibility with the thermoplastic.

Suitable silane compounds have the general formula:

(X-(CH₂)ₙ)ₖ-Si-(O-CₘH₂ₘ₊₁)₄₋ₖ

where the definitions of the substituents are as follows: 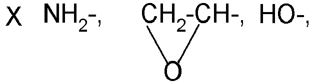
- n: is a whole number from 2 to 10, preferably 3 to 4,
- m: is a whole number from 1 to 5, preferably 1 to 2, and
- k: is a whole number from 1 to 3, preferably 1.

Preferred silane compounds are aminopropyltrimethoxysilane, aminobutyltrimethoxysilane, aminopropyltriethoxysilane and aminobutyltriethoxysilane, and also the corresponding silanes which comprise a glycidyl group as substituent X.

The amounts of the silane compounds generally used for surface-coating are from 0.01 to 2% by weight, preferably from 0.025 to 1.0% by weight and in particular from 0.05 to 0.5% by weight (based on C1)).

Acicular mineral fillers are also suitable.

For the purposes of the invention, acicular mineral fillers are mineral fillers with strongly developed acicular character. An example is acicular wollastonite. The mineral preferably has an LID (length to diameter) ratio of from 8:1 to 35:1, preferably from 8:1 to 11:1. The mineral filler may optionally have been pretreated with the abovementioned silane compounds, but the pretreatment is not essential.

Other fillers which may be mentioned are kaolin, calcined kaolin, wollastonite, talc and chalk, and also lamellar or acicular nanofillers, the amounts of these preferably being from 0.1 to 10%. Materials preferred for this purpose are boehmite, bentonite, montmorillonite, vermiculite, hectorite, and laponite. The lamellar nanofillers are organically modified by prior-art methods, to give them good compatibility with the organic binder. Addition of the lamellar or acicular nanofillers to the inventive nanocomposites gives a further increase in mechanical strength.

Most preferably, the molding composition comprise 1 to 50 wt% of glass fibers.

The molding compositions of the invention can comprise, as component C2), from 0.05 to 3% by weight, preferably from 0.1 to 1.5% by weight, and in particular from 0.1 to 1% by weight, of a lubricant.

Preference is given to the salts of Al, of alkali metals, or of alkaline earth metals, or esters or amides of fatty acids having from 10 to 44 carbon atoms, preferably having from 12 to 44 carbon atoms.

The metal ions are preferably alkaline earth metal and Al, particular preference being given to Ca or Mg.

Preferred metal salts are Ca stearate and Ca montanate, and also Al stearate.

It is also possible to use a mixture of various salts, in any desired mixing ratio.

The carboxylic acids can be monobasic or dibasic. Examples which may be mentioned are pelargonic acid, palmitic acid, lauric acid, margaric acid, dodecanedioic acid, behenic acid, and particularly preferably stearic acid, capric acid, and also montanic acid (a mixture of fatty acids having from 30 to 40 carbon atoms).

The aliphatic alcohols can be monohydric to tetrahydric. Examples of alcohols are n-butanol, n-octanol, stearyl alcohol, ethylene glycol, propylene glycol, neopentyl glycol, pentaerythritol, preference being given to glycerol and pentaerythritol.

The aliphatic amines can be mono- to tribasic. Examples of these are stearylamine, ethylenediamine, propylenediamine, hexamethylenediamine, di(6-aminohexyl)amine, particular preference being given to ethylenediamine and hexamethylenediamine. Preferred esters or amides are correspondingly glycerol distearate, glycerol tristearate, ethylenediamine distearate, glycerol monopalmitate, glycerol trilaurate, glycerol monobehenate, and pentaerythritol tetrastearate.

It is also possible to use a mixture of various esters or amides, or of esters with amides in combination, in any desired mixing ratio.

The molding compositions of the invention can comprise, as component C3), from 0.05 to 3% by weight, preferably from 0.1 to 1.5% by weight, and in particular from 0.1 to 1% by weight, of a copper stabilizer, preferably of a Cu(I) halide, in particular in a mixture with an alkali metal halide, preferably KI, in particular in the ratio 1:4, or of a sterically hindered phenol, or a mixture of these.

Preferred salts of monovalent copper used are cuprous acetate, cuprous chloride, cuprous bromide, and cuprous iodide. The materials comprise these in amounts of from 5 to 500 ppm of copper, preferably from 10 to 250 ppm, based on polyamide.

The advantageous properties are in particular obtained if the copper is present with molecular distribution in the polyamide. This is achieved if a concentrate comprising the polyamide, and comprising a salt of monovalent copper, and comprising an alkali metal halide in the form of a solid, homogeneous solution is added to the molding composition. By way of example, a typical concentrate is composed of from 79 to 95% by weight of polyamide and from 21 to 5% by weight of a mixture composed of copper iodide or copper bromide and potassium iodide. The copper concentration in the solid homogeneous solution is preferably from 0.3 to 3% by weight, in particular from 0.5 to 2% by weight, based on the total weight of the solution, and the molar ratio of cuprous iodide to potassium iodide is from 1 to 11.5, preferably from 1 to 5.

Suitable polyamides for the concentrate are homopolyamides and copolyamides, in particular nylon-6 and nylon-6,6.

Examples of oxidation retarders and heat stabilizers are sterically hindered phenols and/or phosphites and amines (e.g. TAD), hydroquinones, aromatic secondary amines, such as diphenylamines, various substituted members of these groups, and mixtures of these, in concentrations of up to 1% by weight, based on the weight of the thermoplastic molding compositions.

Suitable sterically hindered phenols C4) are in principle all of the compounds which have a phenolic structure and which have at least one bulky group on the phenolic ring.

It is preferable to use, for example, compounds of the formula 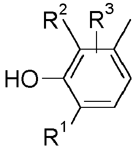 where:
R¹ and R² are an alkyl group, a substituted alkyl group, or a substituted triazole group, and where the radicals R¹ and R² may be identical or different, and R³ is an alkyl group, a substituted alkyl group, an alkoxy group, or a substituted amino group.

Antioxidants of the abovementioned type are described by way of example in DE-A 27 02 661 (US-A 4 360 617).

Another group of preferred sterically hindered phenols is provided by those derived from substituted benzenecarboxylic acids, in particular from substituted benzenepropionic acids.

Particularly preferred compounds from this class are compounds of the formula 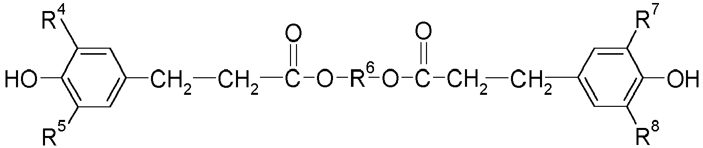 where R⁴, R⁵, R⁷, and R⁸, independently of one another, are C₁-C₈-alkyl groups which themselves may have substitution (at least one of these being a bulky group), and R⁶ is a divalent aliphatic radical which has from 1 to 10 carbon atoms and whose main chain may also have CO bonds.

Preferred compounds corresponding to these formulae are

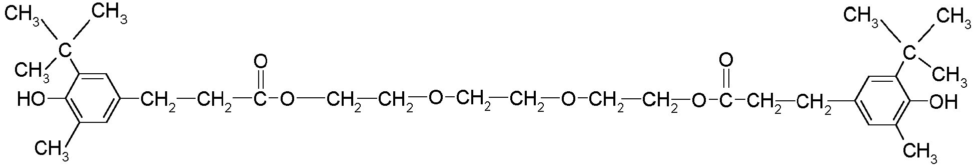

### (Irganox^{®} 245 from BASF SE)

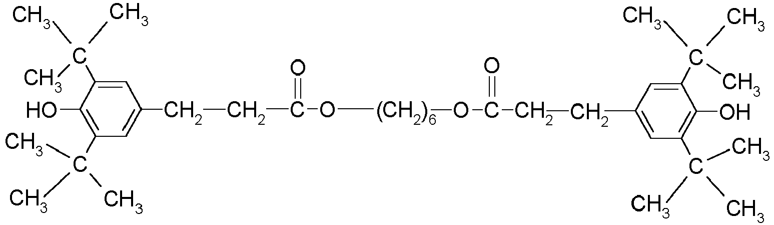

### (Irganox^{®} 259 from BASF SE)

All of the following should be mentioned as examples of sterically hindered phenols:
2,2'-methylenebis(4-methyl-6-tert-butylphenol), 1,6-hexanediol bis[3-(3,5-di-tert-butyl-4-hydroxyphenyl)propionate], pentaerythrityl tetrakis[3-(3,5-di-tert-butyl-4-hydroxyphenyl)propionate], distearyl 3,5-di-tert-butyl-4-hydroxybenzylphosphonate, 2,6,7-trioxa-1-phosphabicyclo[2.2.2]oct-4-ylmethyl 3,5-di-tert-butyl-4-hydroxyhydrocinnamate, 3,5-di-tert-butyl-4-hydroxyphenyl-3,5-distearylthiotriazylamine, 2-(2'-hydroxy-3'-hydroxy-3',5'-di-tert-butylphenyl)-5-chlorobenzotriazole, 2,6-di-tert-butyl-4-hydroxymethylphenol, 1,3,5-trimethyl-2,4,6-tris(3,5-di-tert-butyl-4-hydroxybenzyl)-benzene, 4,4'-methylenebis(2,6-di-tert-butylphenol), 3,5-di-tert-butyl-4-hydroxybenzyldimethylamine.

Compounds which have proven particularly effective and which are therefore used with preference are 2,2'-methylenebis(4-methyl-6-tert-butylphenol), 1,6-hexanediol bis(3,5-di-tert-butyl-4-hydroxyphenyl)propionate (Irganox^{®} 259), pentaerythrityl tetrakis[3-(3,5-di-tert-butyl-4-hydroxyphenyl)propionate], and also N,N'-hexamethylenebis-3,5-di-tert-butyl-4-hydroxyhydrocinnamide (Irganox^{®} 1098), and the product Irganox^{®} 245 described above from BASF SE, which has particularly good suitability.

The amount comprised of the antioxidants C), which can be used individually or as a mixture, is from 0.05 up to 3% by weight, preferably from 0.1 to 1.5% by weight, in particular from 0.1 to 1% by weight, based on the total weight of the molding compositions A) to C).

In some instances, sterically hindered phenols having not more than one sterically hindered group in ortho-position with respect to the phenolic hydroxy group have proven particularly advantageous; in particular when assessing colorfastness on storage in diffuse light over prolonged periods.

The molding compositions of the invention can comprise, as component C5), from 0.05 to 5% by weight, preferably from 0.1 to 2% by weight, and in particular from 0.25 to 1.5% by weight, of a nigrosine.

Nigrosines are generally a group of black or gray phenazine dyes (azine dyes) related to the indulines and taking various forms (water-soluble, oil-soluble, spirit-soluble), used in wool dyeing and wool printing, in black dyeing of silks, and in the coloring of leather, of shoe creams, of varnishes, of plastics, of stoving lacquers, of inks, and the like, and also as microscopy dyes.

Nigrosines are obtained industrially via heating of nitrobenzene, aniline, and aniline hydrochloride with metallic iron and FeCl₃ (the name being derived from the Latin niger = black).

Component C5) can be used in the form of free base or else in the form of salt (e.g. hydrochloride).

Further details concerning nigrosines can be found by way of example in the electronic encyclopedia Römpp Online, Version 2.8, Thieme-Verlag Stuttgart, 2006, keyword "Nigrosine".

The molding compositions of the invention can comprise, as component C6), from 0.001 to 20% by weight, preferably from 0.05 to 10% by weight, and in particular from 0.1 to 5% by weight, of iron powder with a particle size of at most 10 µm (d₅₀ value), where the powder is preferably obtainable via thermal decomposition of pentacarbonyl iron.

Iron occurs in a number of allotropes:
1. α-Fe (ferrite) forms space-centered cubic lattices, is magnetizable, dissolves a small amount of carbon, and occurs in pure iron up to 928°C. At 770°C (Curie temperature) it loses its ferromagnetic properties and becomes paramagnetic; iron in the temperature range from 770 to 928°C is also termed β-Fe. At normal temperature and at a pressure of at least 13 000 MPa, α-Fe becomes what is known as ε-Fe with a reduction of about 0.20 cm³/mol in volume, whereupon density increases from 7.85 to 9.1 (at 20000 MPa);
2. γ-Fe (austenite) forms face-centered cubic lattices, is nonmagnetic, dissolves a large amount of carbon, and is observable only in the temperature range from 928 to 1398°C;
3. δ-Fe, space-centered, exists at from 1398°C to the melting point of 1539°C.

Metallic iron is generally silver-white, density 7.874 (heavy metal), melting point 1539°C, boiling point 2880°C; specific heat (from 18 to 100°C) about 0.5 g⁻¹ K⁻¹, tensile strength from 220 to 280 N/mm². The values apply to chemically pure iron.

Industrial production of iron uses smelting of iron ores, iron slags, calcined pyrites, or blastfurnace dust, and resmelting of scrap and alloys.

The iron powder of the invention is produced via thermal decomposition of pentacarbonyl iron, preferably at temperatures of from 150°C to 350°C. The particles thus obtainable have a preferably spherical shape, therefore being spherical or almost spherical (another term used being spherolitic).

Preferred iron powder has the particle size distribution described below; particle size distribution here is determined by means of laser scattering in very dilute aqueous suspension (e.g. using a Beckmann LS13320). The particle size (and distribution) described hereinafter can optionally be obtained via grinding and/or sieving.
dₓₓ here means that XX% of the total volume of the particles is smaller than the stated value.
d₅₀ values: at most 10 µm, preferably from 1.6 to 8 µm, in particular from 2.9 to 7.5 µm, very particularly from 3.4 to 5.2 µm
d₁₀ values: preferably from 1 to 5 µm, in particular from 1 to 3 µm, and very particularly from 1.4 to 2.7 µm
d₉₀ values: preferably from 3 to 35 µm, in particular from 3 to 12 µm, and very particularly from 6.4 to 9.2 µm.

Component C6) preferably has iron content of from 97 to 99.8 g/100 g, preferably from 97.5 to 99.6 g/100 g. Content of other metals is preferably below 1000 ppm, in particular below 100 ppm, and very particularly below 10 ppm.

Fe content is usually determined via infrared spectroscopy.

C content is preferably from 0.01 to 1.2 g/100 g, preferably from 0.05 to 1.1 g/100 g, and in particular from 0.4 to 1.1 g/100 g. This C content in the preferred iron powders corresponds to that of powders which are not reduced using hydrogen after the thermal decomposition process.

The carbon content is usually determined by combustion of the sample in a stream of oxygen and then using IR to detect the resultant CO₂ gas (by means of a Leco CS230 or CS-mat 6250 from Juwe) by a method based on ASTM E1019.

Nitrogen content is preferably at most 1.5 g/100 g, preferably from 0.01 to 1.2 g/100 g. Oxygen content is preferably at most 1.3 g/100 g, preferably from 0.3 to 0.65 g/100 g.

N and O are determined via heating of the specimen to about 2100°C in a graphite furnace. The oxygen obtained from the specimen here is converted to CO and measured by way of an IR detector. The N liberated under the reaction conditions from the N-containing compounds is discharged with the carrier gas and detected and recorded by means of TCD (Thermal Conductivity Detector) (both methods based on ASTM E1019).

Tap density is preferably from 2.5 to 5 g/cm³, in particular from 2.7 to 4.4 g/cm³. This generally means the density when the powder is, for example, charged to the container and compacted by vibration. Iron powders to which further preference is given can have been surface-coated with iron phosphate, with iron phosphite, or with SiO₂.

BET surface area to DIN ISO 9277 is preferably from 0.1 to 10 m²/g, in particular from 0.1 to 5 m²/g, and preferably from 0.2 to 1 m²/g, and in particular from 0.4 to 1 m²/g.

In order to achieve particularly good dispersion of the iron particles, a masterbatch may be used, involving a polymer. Suitable polymers for this purpose are polyolefins, polyesters, or polyamides, and it is preferable here that the masterbatch polymer is the same as component A). The mass fraction of the iron in the polymer is generally from 15 to 80% by mass, preferably from 20 to 40% by mass.

Examples of other conventional additives C7) are amounts of up to 25% by weight, preferably up to 20% by weight, of elastomeric polymers (also often termed impact modifiers, elastomers, or rubbers).

These are very generally copolymers preferably composed of at least two of the following monomers: ethylene, propylene, butadiene, isobutene, isoprene, chloroprene, vinyl acetate, styrene, acrylonitrile and acrylates and/or methacrylates having from 1 to 18 carbon atoms in the alcohol component.

Polymers of this type are described, for example, in Houben-Weyl, Methoden der organischen Chemie, vol. 14/1 (Georg-Thieme-Verlag, Stuttgart, Germany, 1961), pages 392 to 406, and in the monograph by C. B. Bucknall, "Toughened Plastics" (Applied Science Publishers, London, UK, 1977).

Some preferred types of such elastomers are described below.

Preferred types of such elastomers are those known as ethylene-propylene (EPM) and ethylene-propylene-diene (EPDM) rubbers.

EPM rubbers generally have practically no residual double bonds, whereas EPDM rubbers may have from 1 to 20 double bonds per 100 carbon atoms.

Examples which may be mentioned of diene monomers for EPDM rubbers are conjugated dienes, such as isoprene and butadiene, non-conjugated dienes having from 5 to 25 carbon atoms, such as 1,4-pentadiene, 1,4-hexadiene, 1,5-hexadiene, 2,5-dimethyl-1,5-hexadiene and 1,4-octadiene, cyclic dienes, such as cyclopentadiene, cyclohexadienes, cyclooctadienes and dicyclopentadiene, and also alkenylnorbornenes, such as 5-ethylidene-2-norbornene, 5-butylidene-2-norbornene, 2-methallyl-5-norbornene and 2-isopropenyl-5-norbornene, and tricycledienes, such as 3-methyltricyclo[5.2.1.0^{2,6}]-3,8-decadiene, and mixtures of these. Preference is given to 1,5-hexadiene, 5-ethylidenenorbornene and dicyclopentadiene. The diene content of the EPDM rubbers is preferably from 0.5 to 50% by weight, in particular from 1 to 8% by weight, based on the total weight of the rubber.

EPM rubbers and EPDM rubbers may preferably also have been grafted with reactive carboxylic acids or with derivatives of these. Examples of these are acrylic acid, methacrylic acid and derivatives thereof, e.g. glycidyl (meth)acrylate, and also maleic anhydride.

Copolymers of ethylene with acrylic acid and/or methacrylic acid and/or with the esters of these acids are another group of preferred rubbers. The rubbers may also comprise dicarboxylic acids, such as maleic acid and fumaric acid, or derivatives of these acids, e.g. esters and anhydrides, and/or monomers comprising epoxy groups. These dicarboxylic acid derivatives or monomers comprising epoxy groups are preferably incorporated into the rubber by adding to the monomer mixture monomers comprising dicarboxylic acid groups and/or epoxy groups and having the general formulae I or II or III or IV

R¹C(COOR²)=C(COOR³)R⁴ (I)

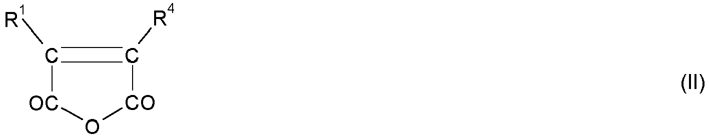

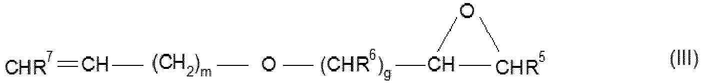

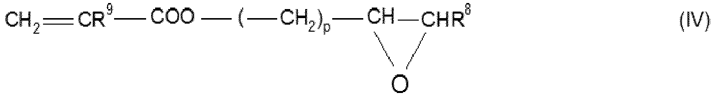

where R¹ to R⁹ are hydrogen or alkyl groups having from 1 to 6 carbon atoms, and m is a whole number from 0 to 20, g is a whole number from 0 to 10 and p is a whole number from 0 to 5.

The radicals R¹ to R⁹ are preferably hydrogen, where m is 0 or 1 and g is 1. The corresponding compounds are maleic acid, fumaric acid, maleic anhydride, allyl glycidyl ether and vinyl glycidyl ether.

Preferred compounds of the formulae I, II and IV are maleic acid, maleic anhydride and (meth)acrylates comprising epoxy groups, such as glycidyl acrylate and glycidyl methacrylate, and the esters with tertiary alcohols, such as tert-butyl acrylate. Although the latter have no free carboxy groups, their behavior approximates to that of the free acids and they are therefore termed monomers with latent carboxy groups.

The copolymers are advantageously composed of from 50 to 98% by weight of ethylene, from 0.1 to 20% by weight of monomers comprising epoxy groups and/or methacrylic acid and/or monomers comprising anhydride groups, the remaining amount being (meth)acrylates.

Particular preference is given to copolymers composed of
- from 50 to 98% by weight, in particular from 55 to 95% by weight, of ethylene,
- from 0.1 to 40% by weight, in particular from 0.3 to 20% by weight, of glycidyl acrylate and/or glycidyl methacrylate, (meth)acrylic acid and/or maleic anhydride, and
- from 1 to 45% by weight, in particular from 5 to 40% by weight, of n-butyl acrylate and/or 2-ethylhexyl acrylate.

Other preferred (meth)acrylates are the methyl, ethyl, propyl, isobutyl and tert-butyl esters.

Comonomers which may be used alongside these are vinyl esters and vinyl ethers.

The ethylene copolymers described above may be prepared by processes known per se, preferably by random copolymerization at high pressure and elevated temperature. Appropriate processes are well-known.

Other preferred elastomers are emulsion polymers whose preparation is described, for example, by Blackley in the monograph "Emulsion Polymerization". The emulsifiers and catalysts which can be used are known per se.

In principle it is possible to use homogeneously structured elastomers or else those with a shell structure. The shell-type structure is determined by the sequence of addition of the individual monomers. The morphology of the polymers is also affected by this sequence of addition.

Monomers which may be mentioned here, merely as examples, for the preparation of the rubber fraction of the elastomers are acrylates, such as, for example, n-butyl acrylate and 2-ethylhexyl acrylate, corresponding methacrylates, butadiene and isoprene, and also mixtures of these. These monomers may be copolymerized with other monomers, such as, for example, styrene, acrylonitrile, vinyl ethers and with other acrylates or methacrylates, such as methyl methacrylate, methyl acrylate, ethyl acrylate or propyl acrylate.

The soft or rubber phase (with a glass transition temperature of below 0°C) of the elastomers may be the core, the outer envelope or an intermediate shell (in the case of elastomers whose structure has more than two shells). Elastomers having more than one shell may also have more than one shell composed of a rubber phase.

If one or more hard components (with glass transition temperatures above 20°C) are involved, besides the rubber phase, in the structure of the elastomer, these are generally prepared by polymerizing, as principal monomers, styrene, acrylonitrile, methacrylonitrile, α-methylstyrene, p-methylstyrene, or acrylates or methacrylates, such as methyl acrylate, ethyl acrylate or methyl methacrylate. Besides these, it is also possible to use relatively small proportions of other comonomers.

It has proven advantageous in some cases to use emulsion polymers which have reactive groups at their surfaces. Examples of groups of this type are epoxy, carboxy, latent carboxy, amino and amide groups, and also functional groups which may be introduced by concomitant use of monomers of the general formula 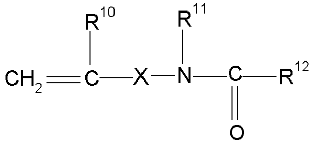 where the substituents can be defined as follows:
- R¹⁰: is hydrogen or a C₁-C₄-alkyl group,
- R¹¹: is hydrogen, a C₁-C₈-alkyl group or an aryl group, in particular phenyl,
- R¹²: is hydrogen, a C₁-C₁₀-alkyl group, a C₆-C₁₂-aryl group, or -OR¹³,
- R¹³: is a C₁-C₈-alkyl group or a C₆-C₁₂-aryl group, which can optionally have substitution by groups that comprise O or by groups that comprise N,
- X: is a chemical bond, a C₁-C₁₀-alkylene group, or a C₆-C₁₂-arylene group, or 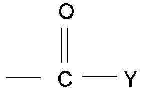
- Y: is O-Z or NH-Z, and
- Z: is a C₁-C₁₀-alkylene or C₆-C₁₂-arylene group.

The graft monomers described in EP-A 208 187 are also suitable for introducing reactive groups at the surface.

Other examples which may be mentioned are acrylamide, methacrylamide and substituted acrylates or methacrylates, such as (N-tert-butylamino)ethyl methacrylate, (N,N-dimethylamino)ethyl acrylate, (N,N-dimethylamino)methyl acrylate and (N,N-diethylamino)ethyl acrylate.

The particles of the rubber phase may also have been crosslinked. Examples of crosslinking monomers are 1,3-butadiene, divinylbenzene, diallyl phthalate and dihydrodicyclopentadienyl acrylate, and also the compounds described in EP-A 50 265.

It is also possible to use the monomers known as graft-linking monomers, i.e. monomers having two or more polymerizable double bonds which react at different rates during the polymerization. Preference is given to the use of compounds of this type in which at least one reactive group polymerizes at about the same rate as the other monomers, while the other reactive group (or reactive groups), for example, polymerize(s) significantly more slowly. The different polymerization rates give rise to a certain proportion of unsaturated double bonds in the rubber. If another phase is then grafted onto a rubber of this type, at least some of the double bonds present in the rubber react with the graft monomers to form chemical bonds, i.e. the phase grafted on has at least some degree of chemical bonding to the graft base.

Examples of graft-linking monomers of this type are monomers comprising allyl groups, in particular allyl esters of ethylenically unsaturated carboxylic acids, for example allyl acrylate, allyl methacrylate, diallyl maleate, diallyl fumarate and diallyl itaconate, and the corresponding monoallyl compounds of these dicarboxylic acids. Besides these there is a wide variety of other suitable graft-linking monomers. For further details reference may be made here, for example, to US patent 4 148 846.

The proportion of these crosslinking monomers in the impact-modifying polymer is generally up to 5% by weight, preferably not more than 3% by weight, based on the impact-modifying polymer.

Some preferred emulsion polymers are listed below. Mention may first be made here of graft polymers with a core and with at least one outer shell, and having the following structure:

| Type | Monomers for the core | Monomers for the envelope |
|---|---|---|
| I | 1,3-butadiene, isoprene, n-butyl acrylate, ethylhexyl acrylate, or a mixture of these | styrene, acrylonitrile, methyl methacrylate |
| II | as I, but with concomitant use of crosslinking agents | as I |
| III | as I or II | n-butyl acrylate, ethyl acrylate, methyl acrylate, 1,3-butadiene, isoprene, ethylhexyl acrylate |
| IV | as I or II | as I or III, but with concomitant use of monomers having reactive groups, as described herein |
| V | styrene, acrylonitrile, methyl methacry-late, or a mixture of these | first envelope composed of monomers as described under I and II for the core, second envelope as described under I or IV for the envelope |

Instead of graft polymers whose structure has more than one shell, it is also possible to use homogeneous, i.e. single-shell, elastomers composed of 1,3-butadiene, isoprene and n-butyl acrylate or of copolymers of these. These products, too, may be prepared by concomitant use of crosslinking monomers or of monomers having reactive groups.

Examples of preferred emulsion polymers are n-butyl acrylate-(meth)acrylic acid copolymers, n-butyl acrylate/glycidyl acrylate or n-butyl acrylate/glycidyl methacrylate copolymers, graft polymers with an inner core composed of n-butyl acrylate or based on butadiene and with an outer envelope composed of the abovementioned copolymers, and copolymers of ethylene with comonomers which supply reactive groups.

The elastomers described may also be prepared by other conventional processes, e.g. by suspension polymerization.

Preference is also given to silicone rubbers, as described in DE-A 37 25 576, EP-A 235 690, DE-A 38 00 603 and EP-A 319 290.

It is, of course, also possible to use mixtures of the types of rubber listed above.

UV stabilizers that may be mentioned, the amounts of which used are generally up to 2% by weight, based on the molding composition, are various substituted resorcinols, salicylates, benzotriazoles, and benzophenones.

Materials that can be added as colorants are inorganic pigments, such as titanium dioxide, ultramarine blue, iron oxide, and carbon black, and also organic pigments, such as phthalocyanines, quinacridones, perylenes, and also dyes, such as anthraquinones.

Materials that can be used as nucleating agents are sodium phenylphosphinate, aluminum oxide, silicon dioxide, and also preferably talc.

The thermoplastic molding compositions of the invention can be produced by processes known per se, by mixing the starting components in conventional mixing apparatus, such as screwbased extruders, Brabender mixers, or Banbury mixers, and then extruding the same. After extrusion, the extrudate can be cooled and pelletized. It is also possible to premix individual components and then to add the remaining starting materials individually and/or likewise in the form of a mixture. The mixing temperatures are generally from 230 to 320°C.

In another preferred mode of operation, components B) and C) can also optionally be mixed with a prepolymer, compounded, and pelletized. The pellets obtained are then solid-phase condensed under an inert gas continuously or batchwise at a temperature below the melting point of component A) until the desired viscosity has been reached.

The thermoplastic molding compositions of the invention feature good processability together with good mechanical properties, and also markedly improved weld line strength and surface, and also thermal stability.

These materials are suitable for the production of fibers, foils, and moldings of any type. Some examples follow: cylinder head covers, motorcycle covers, intake manifolds, charge-air-cooler caps, plug connectors, gearwheels, cooling-fan wheels, and cooling-water tanks.

In the electrical and electronic sector, improved-flow polyamides can be used to produce plugs, plug parts, plug connectors, membrane switches, printed circuit board modules, microelectronic components, coils, I/O plug connectors, plugs for printed circuit boards (PCBs), plugs for flexible printed circuits (FPCs), plugs for flexible integrated circuits (FFCs), high-speed plug connections, terminal strips, connector plugs, device connectors, cable-harness components, circuit mounts, circuit-mount components, three-dimensionally injection-molded circuit mounts, electrical connection elements, and mechatronic components.

Possible uses in automobile interiors are for dashboards, steering-column switches, seat components, headrests, center consoles, gearbox components, and door modules, and possible uses in automobile exteriors are for door handles, exterior-mirror components, windshield-wiper components, windshield-wiper protective housings, grilles, roof rails, sunroof frames, engine covers, cylinder-head covers, intake pipes (in particular intake manifolds), windshield wipers, and also external bodywork components.

Possible uses of improved-flow polyamides in the kitchen and household sector are for the production of components for kitchen devices, e.g. fryers, smoothing irons, knobs, and also applications in the garden and leisure sector, e.g. components for irrigation systems, or garden devices, and door handles.

### Examples

The following components were used:
Component A1:
   Polybutylene terephthalate having a viscosity number VN of 130 ml/g, measured in phenol/1,2-dichlorobenzene (1:1) at 25°C according to ISO 1628 (Ultradur^{®} B4500 from BASF SE).
Component A2:
   Polyamide 6 having a viscosity number VN of 150 ml/g, measured on a 0.5% strength by weight solution in 96% strength by weight of sulfuric acid at 25°C to ISO 307 (Ultramid^{®} B27 from BASF SE).
Component A3:
   Polyamide 66 having a viscosity number VN of 150 ml/g, measured on a 0.5% strength by weight solution in 96% strength by weight of sulfuric acid at 25°C to ISO 307 (Ultramid^{®} A27 from BASF SE).
Component A4:
   Polyamide 9T having a viscosity number VN of 117 ml/g, measured on a 0.5% strength by weight solution in 96% strength by weight of sulfuric acid at 25°C to ISO 307 (Genestar^{™} GC72018 from Kuraray).
Component A5:
   Polyamide 6T/6I having a viscosity number VN of 93 ml/g, measured on a 0.5% strength by weight solution in 96% strength by weight of sulfuric acid at 25°C to ISO 307 (Arlen^{™} A3000 from Mitsui Chemicals).
Component A6:
   Polyethylene terephthalate having a viscosity number VN of 75 to 100 ml/g measured in phenol/1,2-dichlorobenzene (1:1) at 25°C according to ISO 1628.
Component B/1:
   3,3'-Bicarbazole (CAS: 1984-49-2, from Interchim).
Component B/2:
   4-Glycidyloxycarbazole (CAS: 51997-51-4, from TCI).
Component B/3:
   Poly(N-vinylcarbazole) (CAS: 25067-59-8, from TCI).
Component B/4:
   3,6-Diaminocarbazole (CAS 86-71-5, from Interchim) of these, B/1 is most preferred, followed by B/2, B/4 and then B/3.
Component C/1a:
   Glass fibers (ECS03T-127H from Nippon Electric Glass Co., Ltd.).
Component C/2a:
   Lubricant (Loxiol^{®} P 861/3.5 from Emery Oleochemicals).
Component C/1b:
   Glass fibers (DS 1125-10N from 3B Fibreglass).
Component C/2b:
   N,N'-Ethylendi(stearamide) (Acrawax^{®} C from Lonza Cologne GmbH).
Component C/1c:
   Glass fibers (NEG 3660 from Nippon Electric Glass Co., Ltd.).
Component C/2c:
   Lubricant (Luwax^{®} OA from BASF SE).
PBT and PBT/PET blend examples

PBT granules were dried at 80°C to a moisture content of less than 0.04% by weight. Subsequently, they were mixed with the other components in a twin screw extruder having a diameter of 25 mm, and a LID ratio of 44, which was operated at 185 min⁻¹ and at 9.8 kg/h and at a cylinder temperature of 270°C.

The granules obtained were used for injection molding tensile bars. The mechanical properties were determined according to ISO 527 as of 2019. Before and after heat treatment at 180°C for 2016 hours the results are shown in the below tables.

**Table 1. Components [% by weight]**

| Examples | A1 | B/1 | B/2 | B/3 | C/1a | C/2a |
|---|---|---|---|---|---|---|
| 1C | 69.5 | | | | 30 | 0.5 |
| 1 | 69.3 | 0.2 | | | 30 | 0.5 |
| 2 | 68.8 | | 0.7 | | 30 | 0.5 |
| 3 | 68.9 | | | 0.6 | 30 | 0.5 |

| | | | | | | |
|---|---|---|---|---|---|---|
| C = for comparison | | | | | | |

**Table 2. Mechanical properties after heat-aging at 180°C**

| Examples | Modulus of elasticity, MPa | | | | |
|---|---|---|---|---|---|
| | 0 h | 504 h | 1008 h | 1512 h | 2016 h |
| 1C | 9574 | 10253 | 10436 | 10513 | 10689 |
| 1 | 9488 | 10266 | 10269 | 10236 | 10532 |
| 2 | 9655 | 10335 | 10689 | 10739 | 10735 |
| 3 | 9825 | 10530 | 10804 | 11058 | 10861 |

| Examples | Tensile strength, MPa | | | | |
|---|---|---|---|---|---|
| | 0 h | 504 h | 1008 h | 1512 h | 2016 h |
| 1C | 137 | 146 | 109 | 89 | 76 |
| 1 | 132 | 153 | 147 | 138 | 123 |
| 2 | 137 | 158 | 156 | 147 | 127 |
| 3 | 140 | 155 | 126 | 109 | 91 |

| Examples | Elongation at break, % | | | | |
|---|---|---|---|---|---|
| | 0 h | 504 h | 1008 h | 1512 h | 2016 h |
| 1C | 3,6 | 2,5 | 1,4 | 1,2 | 1,1 |
| 1 | 3,5 | 3,0 | 2,5 | 2,2 | 1,8 |
| 2 | 3,6 | 3,0 | 2,6 | 2,1 | 1,6 |
| 3 | 3,6 | 2,7 | 1,6 | 1,4 | 1,2 |

**Table 3. Components [% by weight]**

| Examples | A1 | A6 | B/1 | C/1a | C/2a |
|---|---|---|---|---|---|
| 1C | 49.7 | 20 | | 30 | 0.3 |
| 1 | 49.2 | 20 | 0.5 | 30 | 0.3 |

**Table 4. Mechanical properties after heat-aging at 180°C**

| Examples | Modulus of elasticity, MPa | | | | |
|---|---|---|---|---|---|
| | 0 h | 504 h | 1008 h | 1512 h | 2016 h |
| 1C | 10033 | 10827 | 10861 | 11014 | 11113 |
| 1 | 10107 | 10880 | 10889 | 11013 | 11051 |

| Examples | Tensile strength, MPa | | | | |
|---|---|---|---|---|---|
| | 0h | 504h | 1008h | 1512h | 2016h |
| 1C | 142 | 131 | 116 | 108 | 96 |
| 1 | 143 | 132 | 122 | 112 | 108 |

| Examples | Elongation at break, % | | | | |
|---|---|---|---|---|---|
| | 0 h | 504 h | 1008 h | 1512 h | 2016 h |
| 1C | 3.2 | 2.0 | 1.8 | 1.7 | 1.4 |
| 1 | 3.1 | 2.1 | 2.0 | 1.8 | 1.7 |

### Polyamide examples

Polyamide granules were dried at 80°C to a moisture content of less than 0.1% by weight. Subsequently, they were mixed with the other components in a twin screw extruder having a diameter of 25 mm and a LID ratio of 44, which was operated at 280 min⁻¹ and at 10.5 kg/h and at a cylinder temperature of 280°C.

The granules obtained were used for injection molding tensile bars. The mechanical properties were determined according to ISO 527 as of 2019. Before and after heat treatment at 280°C for 2016 hours the results are shown in the below tables.

### Polyamide 6:

**Table 5. Components [% by weight]**

| Examples | A2 | B/1 | B/3 | B/4 | C/1b | C/2b |
|---|---|---|---|---|---|---|
| 1C | 69.4 | | | | 30 | 0.6 |
| 1 | 68.9 | 0.5 | | | 30 | 0.6 |
| 2 | 68.8 | | | 0.6 | 30 | 0.6 |
| 3 | 68.8 | | 0.6 | | 30 | 0.6 |

**Table 6. Mechanical properties after heat-aging at 180°C**

| Examples | Modulus of elasticity, MPa | | | | |
|---|---|---|---|---|---|
| | 0 h | 504 h | 1008 h | 1512 h | 2016 h |
| 1C | 9487 | 10613 | 10740 | 10635 | 10545 |
| 1 | 9349 | 10519 | 10534 | 10809 | 10695 |
| 2 | 9483 | 10657 | 10607 | 10815 | 10602 |
| 3 | 9479 | 10689 | 10654 | 10579 | 10665 |

| Examples | Tensile strength, MPa | | | | |
|---|---|---|---|---|---|
| | 0h | 504h | 1008h | 1512h | 2016h |
| 1C | 177 | 156 | 145 | 134 | 114 |
| 1 | 177 | 167 | 152 | 144 | 139 |
| 2 | 179 | 171 | 163 | 156 | 155 |
| 3 | 176 | 157 | 147 | 139 | 127 |

| Examples | Elongation at break, % | | | | |
|---|---|---|---|---|---|
| | 0 h | 504 h | 1008 h | 1512 h | 2016 h |
| 1C | 4.0 | 1.9 | 1.6 | 1.5 | 1.2 |
| 1 | 4.1 | 2.6 | 2.2 | 1.6 | 1.6 |
| 2 | 3.7 | 2.6 | 2.4 | 1.8 | 1.8 |
| 3 | 4.1 | 1.9 | 1.7 | 1.6 | 1.4 |

**Table 7. Components [% by weight]**

| Examples | A3 | B/1 | B/2 | C/1b | C/2b |
|---|---|---|---|---|---|
| 1C | 69.8 | | | 30 | 0.2 |
| 1 | 69.3 | 0.5 | | 30 | 0.2 |
| 2 | 69.1 | | 0.7 | 30 | 0.2 |

**Table 8. Mechanical properties after heat-aging at 180°C**

| Examples | Modulus of elasticity, MPa | | | | |
|---|---|---|---|---|---|
| | 0 h | 504 h | 1008 h | 1512 h | 2016 h |
| 1C | 9840 | 10177 | 10072 | 10269 | 9904 |
| 1 | 9867 | 10248 | 10299 | 10273 | 10261 |
| 2 | 9947 | 10206 | 10429 | 10321 | 10169 |

| Examples | Tensile strength, MPa | | | | |
|---|---|---|---|---|---|
| | 0h | 504h | 1008h | 1512h | 2016h |
| 1C | 187 | 133 | 98 | 67 | 48 |
| 1 | 190 | 174 | 144 | 126 | 108 |
| 2 | 193 | 164 | 147 | 121 | 99 |

| Examples | Elongation at break, % | | | | |
|---|---|---|---|---|---|
| | 0 h | 504 h | 1008 h | 1512 h | 2016 h |
| 1C | 3.6 | 1.6 | 1.1 | 0.7 | 0.5 |
| 1 | 3.5 | 2.3 | 1.7 | 1.4 | 1.2 |
| 2 | 3.6 | 2.1 | 1.7 | 1.3 | 1.1 |

### Polyamides 9T and 6T/6I

High temperature polyamide granules were dried at 100°C to a moisture content of less than 0.05% by weight. Subsequently, they were mixed with the other components in a twin screw extruder having a diameter of 25 mm and a LID ratio of 44, which was operated at 200 min⁻¹ and at 10 kg/h and at a cylinder temperature of 320 to 340°C.

The granules obtained were used for injection molding tensile bars. The mechanical properties were determined according to ISO 527 as of 2019. Before and after heat treatment at 180°C for 2016 hours the results are shown in the below tables.

**Table 9. Components [% by weight]**

| Examples | A4 | A5 | B/1 | C/1c | C/2c |
|---|---|---|---|---|---|
| 1C | 69.5 | | | 30 | 0.5 |
| 1 | 68.5 | | 1 | 30 | 0.5 |
| 2C | | 69.5 | | 30 | 0.5 |
| 2 | | 68.5 | 1 | 30 | 0.5 |

**Table 10. Mechanical properties after heat-aging at 180°C**

| Examples | Modulus of elasticity, MPa | | | | |
|---|---|---|---|---|---|
| | 0 h | 504 h | 1008 h | 1512 h | 2016 h |
| 1C | 9315 | 9532 | 9892 | 9990 | 9734 |
| 1 | 9419 | 9841 | 9855 | 10018 | 9992 |
| 2C | 11061 | 11717 | 11909 | 11886 | 11620 |
| 2 | 11333 | 12110 | 12379 | 12490 | 12280 |

| Examples | Tensile strength, MPa | | | | |
|---|---|---|---|---|---|
| | 0h | 504h | 1008h | 1512h | 2016h |
| 1C | 190 | 153 | 133 | 118 | 97 |
| 1 | 196 | 143 | 142 | 135 | 122 |
| 2C | 200 | 158 | 143 | 126 | 109 |
| 2 | 199 | 162 | 157 | 155 | 144 |

| Examples | Elongation at break, % | | | | |
|---|---|---|---|---|---|
| | 0 h | 504 h | 1008 h | 1512 h | 2016 h |
| 1C | 3.0 | 2.3 | 1.9 | 1.7 | 1.4 |
| 1 | 3.1 | 2.0 | 2.0 | 1.9 | 1.7 |
| 2C | 2.2 | 1.9 | 1.7 | 1.6 | 1.4 |
| 2 | 2.1 | 1.9 | 1.9 | 1.9 | 1.7 |

## Claims

1. A thermoplastic molding composition, comprising
A) from 10 to 99.99% by weight of a thermoplastic polymer selected from aliphatic or semiaromatic polyamides and polybutylene terephthalate,
B) from 0.01 to 20% by weight of at least one carbazole compound selected from substituted and unsubstituted carbazole and organic compounds containing at least one chemically bonded substituted or unsubstituted carbazole residue,
C) from 0 to 70% by weight of further additives,
where the total of the percentages by weight of components A) to C) is 100% by weight.

2. The thermoplastic molding composition according to claim 1, comprising from 1 to 50% by weight of a fibrous or particulate additive C1).

3. The thermoplastic molding composition according to claim 1, in which the thermoplastic polymer A) is selected from PA 6, PA 66, PA 6/66, PA 66/6, PA 6/6.36, PA 6I/6T, PA 6T/6I, PA 9T and PA 6T/66 or polybutylene terephthalate.

4. The thermoplastic molding composition according to one of claims 1 to 3, wherein in the at least one carbazole compound the carbazole nitrogen is unsubstituted or bears a hydrocarbon residue having at least one alpha hydrogen atom as substituent.

5. The thermoplastic molding composition according to one of claims 1 to 4, wherein the at least one carbazole compound is selected from the group consisting
- of compounds having a substituted carbazole residue and having a molecular weight of at least 200 g/mol, wherein the nitrogen atom of the carbazole residue bears hydrogen or a C₁₋₂₀-alkyl substituent,
- of compounds having a carbazole residue substituted by one or more primary amino groups, carboxyl groups, carbodiimide groups, anhydride groups, isocyanate groups, and/or epoxy groups, or by residues, bearing at least one of these groups, or
- of compounds having at least two substituted or unsubstituted carbazole residues in their molecular structure.

6. The thermoplastic molding composition according to one of claims 1 to 5, in which the carbazole compound B) is a polymer having at least three substituted or unsubstituted carbazole residues in its molecular structure, or is a carbazole compound in which the nitrogen atom of the carbazole residue is substituted by hydrogen, or is a carbazole compound having at least one primary amino group, carboxyl group and/or epoxy group covalently linked with the carbazole residue in the 3-, 4- or N-position.

7. The thermoplastic molding composition according to one of claims 1 to 6, in which the carbazole compound is selected from the group consisting of 3,3'-bicarbazole, 11H-benzo[a]carbazole, 7H-benzo[c]carbazole, 5H-benzo[4,5]thieno[3,2-c]carbazole, 10-bromo-7H-benzo[c]carbazole, 1-bromocarbazole, 2-bromocarbazole, 3-bromocarbazole; 4-bromocarbazole, 2-bromo-7-methoxy-9H-carbazole, 3-(tert-butyl)-9H-carbazole, 3,6-di-tert-butylcarbazole, carprofen, 2-chloro-9H-carbazole, 3,6-diaminocarbazole, 7H-dibenzo[c,g]carbazole, 2,7-dibromocarbazole, 3,6-dibromocarbazole, 3,6-dichlorocarbazole, 3,6-diethynylcarbazole, 10,15-dihydro-5H-diindolo[3,2-a:3',2'-c]carbazole, 5,7-dihydroindolo[2,3-b]carbazole, 5,11-dihydroindolo[3,2-b]carbazole, 11,12-dihydroindolo[2,3-a]carbazole, 11,12-dihydro-11-phenylindolo[2,3-a]carbazole, 3,6-diiodocarbazole, 2,7-dimethoxy-9H-carbazole, 3,6-dimethoxy-9H-carbazole, 3,6-dimethylcarbazole, 3,6-diphenylcarbazole, 2,7-diphenyl-9H-carbazole, 3-fluorocarbazole, 2-fluoro-9H-carbazole, 4-glycidyloxycarbazole, 3-lodocarbazole, 2-methoxycarbazole, methyl-9H-carbazole, 2-phenyl-9H-carbazole, 3-phenyl-9H-carbazole, 4-phenyl-9H-carbazole, 5-phenyl-5,12-dihydroindolo[3,2-a]carbazole, 1,3,6,8-tetrabromocarbazole, 1,3,6,8-tetra-tert-butylcarbazole, and N,N,N',N'-tetrakis(4-methoxyphenyl)-9H-carbazole-3,6-diamine, and poly(N-vinylcarbazole).

8. The thermoplastic molding composition according to claim 7, in which component B) is selected from the group consisting of 3,3'-bicarbazole, 11,12-dihydroindolo[2,3-a]carbazole, 3,6-di-tert-butylcarbazole, 6-diaminocarbazole, 3,6-dibromocarbazole, 3,6-dimethoxy-9H-carbazole, 4-glycidyloxycarbazole and poly(N-vinylcarbazole).

9. The thermoplastic molding composition according to one of claims 1 to 8 which is free from triplet emitters.

10. The use of at least one carbazole compound selected from, substituted and unsubstituted carbazole and organic compounds containing at least one chemically bonded substituted or unsubstituted carbazole residue as heat stabilizer in thermoplastic molding compositions comprising aliphatic or semiaromatic polyamides, or polybutylene terephthalate as thermoplastic polymer.

11. The use according to claim 10, wherein in the at least one carbazole compound, the carbazole nitrogen is unsubstituted or substituted by a hydrocarbon residue having at least one alpha hydrogen atom.

12. The use according to claim 10 or 11, wherein the at least one carbazole compound is selected from the group consisting
- of compounds having a substituted carbazole residue and having a molecular weight of at least 200 g/mol, wherein the nitrogen atom of the carbazole residue bears hydrogen or a C₁₋₂₀-alkyl substituent,
- of compounds having a carbazole residue substituted by one or more primary amino groups, carboxyl groups, carbodiimide groups, anhydride groups, isocyanate groups, and/or epoxy groups, or by residues, bearing at least one of these groups, or
- of compounds having at least two substituted or unsubstituted carbazole residues in their molecular structure.

13. The use of the thermoplastic molding compositions according to one of claims 1 to 9 for producing fibers, foils, and moldings of any type.

14. A fiber, foil, or molding, made of the thermoplastic molding composition according to one of claims 1 to 9.

## Patentansprüche

1. Thermoplastische Formmasse, umfassend
A) zu 10 bis 99,99 Gew.-% ein thermoplastisches Polymer, ausgewählt aus aliphatischen oder halbaromatischen Polyamiden und Polybutylenterephthalat,
B) zu 0,01 bis 20 Gew.-% mindestens eine Carbazolverbindung, ausgewählt aus substituiertem und unsubstituiertem Carbazol und organischen Verbindungen, die mindestens einen chemisch gebundenen substituierten oder unsubstituierten Carbazolrest enthalten,
C) zu 0 zu 70 Gew.-% weitere Zusatzstoffe,
wobei der Gesamtgewichtsprozentsatz der Komponenten A) bis C) 100 Gew.-% beträgt.

2. Thermoplastische Formmasse nach Anspruch 1, umfassend zu 1 bis 50 Gew.-% einen faserigen oder teilchenförmigen Zusatzstoff C1).

3. Thermoplastische Formmasse nach Anspruch 1, wobei das thermoplastische Polymer A) ausgewählt ist aus PA 6, PA 66, PA 6/66, PA 66/6, PA 6/6.36, PA 61/6T, PA 6T/6I, PA 9T und PA 6T/66 oder Polybutylenterephthalat.

4. Thermoplastische Formmasse nach einem der Ansprüche 1 bis 3, wobei in der mindestens einen Carbazolverbindung der Carbazolstickstoff unsubstituiert ist oder einen Kohlenwasserstoffrest mit mindestens einem alpha-Wasserstoffatom als Substituenten trägt.

5. Thermoplastische Formmasse nach einem der Ansprüche 1 bis 4, wobei die mindestens eine Carbazolverbindung ausgewählt ist aus der Gruppe bestehend
- aus Verbindungen mit einem substituierten Carbazolrest und mit einem Molekulargewicht von mindestens 200 g/mol, wobei das Stickstoffatom des Carbazolrests Wasserstoff oder einen C₁₋₂₀-Alkyl-Substituenten trägt,
- aus Verbindungen mit einem Carbazolrest, der durch eine oder mehrere primäre Aminogruppen, Carboxylgruppen, Carbodiimidgruppen, Anhydridgruppen, Isocyanatgruppen und/oder Epoxygruppen oder durch Reste substituiert ist, die mindestens eine dieser Gruppen tragen, oder
- aus Verbindungen mit mindestens zwei substituierten oder unsubstituierten Carbazolresten in ihrer Molekülstruktur.

6. Thermoplastische Formmasse nach einem der Ansprüche 1 bis 5, wobei die Carbazolverbindung B) ein Polymer mit mindestens drei substituierten oder unsubstituierten Carbazolresten in seiner Molekülstruktur ist oder eine Carbazolverbindung ist, wobei das Stickstoffatom des Carbazolrests durch Wasserstoff substituiert ist, oder eine Carbazolverbindung mit mindestens einer primären Aminogruppe, Carboxylgruppe und/oder Epoxygruppe ist, die in der 3-, 4- oder N-Position kovalent an den Carbazolrest gebunden ist.

7. Thermoplastische Formmasse nach einem der Ansprüche 1 bis 6, wobei die Carbazolverbindung ausgewählt ist aus der Gruppe bestehend aus 3,3'-Bicarbazol, 11H-Benzo[a]carbazol, 7H-Benzo[c]carbazol, 5H-Benzo[4,5]thieno[3,2-c]carbazol, 10-Brom-7H-benzo[c]carbazol, 1-Bromcarbazol, 2-Bromcarbazol, 3-Bromcarbazol; 4-Bromcarbazol, 2-Brom-7-methoxy-9H-carbazol, 3-(tert-Butyl)-9H-carbazol, 3,6-Di-tert-butylcarbazol, Carprofen, 2-Chlor-9H-carbazol, 3,6-Diaminocarbazol, 7H-Dibenzo[c,g]carbazol, 2,7-Dibromcarbazol, 3,6-Dibromcarbazol, 3,6-Dichlorcarbazol, 3,6-Diethinylcarbazol, 10,15-Dihydro-5H-diindolo[3,2-a:3',2'-c]carbazol, 5,7-Dihydroindolo[2,3-b]carbazol, 5,11-Dihydroindolo[3,2-b]carbazol, 11,12-Dihydroindolo[2,3-a]carbazol, 11,12-Dihydro-11-phenylindolo[2,3-a]carbazol, 3,6-Diiodcarbazol, 2,7-Dimethoxy-9H-carbazol, 3,6-Dimethoxy-9H-carbazol, 3,6-Dimethylcarbazol, 3,6-Diphenylcarbazol, 2,7-Diphenyl-9H-carbazol, 3-Fluorcarbazol, 2-Fluor-9H-carbazol, 4-Glycidyloxycarbazol, 3-Iodcarbazol, 2-Methoxycarbazol, Methyl-9H-carbazol, 2-Phenyl-9H-carbazol, 3-Phenyl-9H-carbazol, 4-Phenyl-9H-carbazol, 5-Phenyl-5,12-dihydroindolo[3,2-a]carbazol, 1,3,6,8-Tetrabromcarbazol, 1,3,6,8-Tetra-tert-butylcarbazol und N,N,N',N'-Tetrakis(4-methoxyphenyl)-9H-carbazol-3,6-diamin und Poly(N-vinylcarbazol).

8. Thermoplastische Formmasse nach Anspruch 7, wobei Komponente B) ausgewählt ist aus der Gruppe bestehend aus 3,3'-Bicarbazol, 11,12-Dihydroindolo[2,3-a]carbazol, 3,6-Di-tert-butylcarbazol, 6-Diaminocarbazol, 3,6-Dibromcarbazol, 3,6-Dimethoxy-9H-carbazol, 4-Glycidyloxycarbazol und Poly(N-vinylcarbazol).

9. Thermoplastische Formmasse nach einem der Ansprüche 1 bis 8, die frei von Triplett-Emittern ist.

10. Verwendung mindestens einer Carbazolverbindung, die ausgewählt ist aus substituiertem und unsubstituiertem Carbazol und organischen Verbindungen, die mindestens einen chemisch gebundenen substituierten oder unsubstituierten Carbazolrest enthalten, als Wärmestabilisatoren in thermoplastischen Formmassen, die aliphatische oder halbaromatische Polyamide oder Polybutylenterephthalat als thermoplastisches Polymer umfassen.

11. Verwendung nach Anspruch 10, wobei in der mindestens einen Carbazolverbindung der Carbazolstickstoff unsubstituiert oder durch einen Kohlenwasserstoffrest mit mindestens einem alpha-Wasserstoffatom substituiert ist.

12. Verwendung nach Anspruch 10 oder 11, wobei die mindestens eine Carbazolverbindung ausgewählt ist aus der Gruppe bestehend
- aus Verbindungen mit einem substituierten Carbazolrest und mit einem Molekulargewicht von mindestens 200 g/mol, wobei das Stickstoffatom des Carbazolrests Wasserstoff oder einen C₁₋₂₀-Alkyl-Substituenten trägt,
- aus Verbindungen mit einem Carbazolrest, der durch eine oder mehrere primäre Aminogruppen, Carboxylgruppen, Carbodiimidgruppen, Anhydridgruppen, Isocyanatgruppen und/oder Epoxygruppen oder durch Reste substituiert ist, die mindestens eine dieser Gruppen tragen, oder
- aus Verbindungen mit mindestens zwei substituierten oder unsubstituierten Carbazolresten in ihrer Molekülstruktur.

13. Verwendung der thermoplastischen Formmassen nach einem der Ansprüche 1 bis 9 zum Herstellen von Fasern, Folien und Formteilen jedweder Art.

14. Faser, Folie oder Formteil, hergestellt aus der thermoplastischen Formmasse nach einem der Ansprüche 1 bis 9.

## Revendications

1. Composition de moulage thermoplastique, comprenant :
A) entre 10 et 99,99 % en masse d'un polymère thermoplastique choisi parmi les polyamides aliphatiques ou semi-aromatiques et le polybutylène téréphtalate,
B) entre 0,01 et 20 % en masse d'au moins un composé de type carbazole choisi parmi le carbazole substitué et non substitué et les composés organiques contenant au moins un résidu de carbazole substitué ou non substitué chimiquement lié,
C) entre 0 et 70 % en masse d'additifs supplémentaires,
où le total des pourcentages en masse des composants A) à C) est de 100 % en masse.

2. Composition de moulage thermoplastique selon la revendication 1, comprenant entre 1 et 50 % en masse d'un additif fibreux ou particulaire C1).

3. Composition de moulage thermoplastique selon la revendication 1, dans laquelle le polymère thermoplastique A) est choisi parmi PA 6, PA 66, PA 6/66, PA 66/6, PA 6/6.36, PA 61/6T, PA 6T/6I, PA 9T et PA 6T/66 ou le polybutylène téréphtalate.

4. Composition de moulage thermoplastique selon l'une des revendications 1 à 3, dans laquelle dans l'au moins un composé de type carbazole l'azote du carbazole est non substitué ou porte un résidu hydrocarboné ayant au moins un atome d'hydrogène alpha en tant que substituant.

5. Composition de moulage thermoplastique selon l'une des revendications 1 à 4, dans laquelle l'au moins un composé de type carbazole est choisi dans le groupe constitué
- par les composés ayant un résidu de carbazole substitué et ayant une masse moléculaire d'au moins 200 g/mol, dans laquelle l'atome d'azote du résidu de carbazole porte un hydrogène ou un substituant alkyle en C₁₋₂₀,
- par les composés ayant un résidu de carbazole substitué par un ou plusieurs groupements amino primaires, groupements carboxyle, groupements carbodiimide, groupements anhydride, groupements isocyanate et/ou groupements époxy, ou par des résidus portant au moins l'un de ces groupements, ou
- par les composés ayant au moins deux résidus de carbazole substitués ou non substitués au sein de leur structure moléculaire.

6. Composition de moulage thermoplastique selon l'une des revendications 1 à 5, dans laquelle le composé de type carbazole B) est un polymère ayant au moins trois résidus de carbazole substitués ou non substitués au sein de sa structure moléculaire, ou est un composé de type carbazole dans lequel l'atome d'azote du résidu de carbazole est substitué par un hydrogène, ou est un composé de type carbazole ayant au moins un groupement amino primaire, un groupement carboxyle et/ou un groupement époxy lié de manière covalente au résidu de carbazole en position 3, 4 ou N.

7. Composition de moulage thermoplastique selon l'une des revendications 1 à 6, dans laquelle le composé de type carbazole est choisi dans le groupe constitué par le 3,3'-bicarbazole, le 11H-benzo[a]carbazole, le 7H-benzo[c]carbazole, le 5H-benzo[4,5]thiéno[3,2-c]carbazole, le 10-bromo-7H-benzo[c]carbazole, le 1-bromocarbazole, le 2-bromocarbazole, le 3-bromocarbazole, le 4-bromocarbazole, le 2-bromo-7-méthoxy-9H-carbazole, le 3-(tert-butyl)-9H-carbazole, le 3,6-di-tert-butylcarbazole, le carprofène, le 2-chloro-9H-carbazole, le 3,6-diaminocarbazole, le 7H-dibenzo[c,g]carbazole, le 2,7-dibromocarbazole, le 3,6-dibromocarbazole, le 3,6-dichlorocarbazole, le 3,6-diéthynylcarbazole, le 10,15-dihydro-5H-diindolo[3,2-a:3',2'-c]carbazole, le 5,7-dihydroindolo[2,3-b]carbazole, le 5,11-dihydroindolo[3,2-b]carbazole, le 11,12-dihydroindolo[2,3-a]carbazole, le 11,12-dihydro-11-phénylindolo[2,3-a]carbazole, le 3,6-diiodocarbazole, le 2,7-diméthoxy-9H-carbazole, le 3,6-diméthoxy-9H-carbazole, le 3,6-diméthylcarbazole, le 3,6-diphénylcarbazole, le 2,7-diphényl-9H-carbazole, le 3-fluorocarbazole, le 2-fluoro-9H-carbazole, le 4-glycidyloxycarbazole, le 3-iodocarbazole, le 2-méthoxycarbazole, le méthyl-9H-carbazole, le 2-phényl-9H-carbazole, le 3-phényl-9H-carbazole, le 4-phényl-9H-carbazole, le 5-phényl-5,12-dihydroindolo[3,2-a]carbazole, le 1,3,6,8-tétrabromocarbazole, le 1,3,6,8-tétra-tert-butylcarbazole et la N,N,N',N'-tétrakis(4-méthoxyphényl)-9H-carbazole-3,6-diamine et le poly(N-vinylcarbazole).

8. Composition de moulage thermoplastique selon la revendication 7, dans laquelle le composant B) est choisi dans le groupe constitué par le 3,3'-bicarbazole, le 11,12-dihydroindolo[2,3-a]carbazole, le 3,6-di-tert-butylcarbazole, le 6-diaminocarbazole, le 3,6-dibromocarbazole, le 3,6-diméthoxy-9H-carbazole, le 4-glycidyloxycarbazole et le poly(N-vinylcarbazole).

9. Composition de moulage thermoplastique selon l'une des revendications 1 à 8 qui est exempt d'émetteurs de triplets.

10. Utilisation d'au moins un composé de type carbazole choisi parmi le carbazole substitué et non substitué et les composés organiques contenant au moins un résidu de carbazole substitué ou non substitué chimiquement lié en tant que stabilisant thermique dans des compositions de moulage thermoplastique comprenant des polyamides aliphatiques ou semi-aromatiques, ou du polybutylène téréphtalate en tant que polymère thermoplastique.

11. Utilisation selon la revendication 10, dans laquelle dans l'au moins un composé de type carbazole, l'azote du carbazole est non substitué ou substitué par un résidu hydrocarboné ayant au moins un atome d'hydrogène alpha.

12. Utilisation selon la revendication 10 ou 11, dans lequel l'au moins un composé de type carbazole est choisi dans le groupe constitué
- par les composés ayant un résidu de carbazole substitué et ayant une masse moléculaire d'au moins 200 g/mol, dans laquelle l'atome d'azote du résidu de carbazole porte un hydrogène ou un substituant alkyle en C₁₋₂₀,
- par les composés ayant un résidu de carbazole substitué par un ou plusieurs groupements amino primaires, groupements carboxyle, groupements carbodiimide, groupements anhydride, groupements isocyanate et/ou groupements époxy, ou par des résidus portant au moins l'un de ces groupements, ou
- par les composés ayant au moins deux résidus de carbazole substitués ou non substitués au sein de leur structure moléculaire.

13. Utilisation des compositions de moulage thermoplastique selon l'une des revendications 1 à 9 pour la production de fibres, de feuilles et de moulages de tout type.

14. Fibre, feuille ou moulage fabriqués en la composition de moulage thermoplastique selon l'une des revendications 1 à 9.
